# EUROPÄISCHE PATENTSCHRIFT

(11) **EP 1 594 780 B1**
(45) Veröffentlichungstag und Bekanntmachung des Hinweises auf die Patenterteilung: **03.01.2007**
(21) Anmeldenummer: 04708348.0
(22) Anmeldetag: 05.02.2004
(51) Int. Cl.: B65G 47/82, F26B 5/06, B65G 1/04

(54) **EINRICHTUNG MIT EINER STELLFLÄCHE**
APPARATUS HAVING A SUPPORTING SURFACE
DISPOSITIF COMPORTANT UNE SURFACE SUPPORT

(30) Priorität: 22.02.2003 DE 10307571
(43) Veröffentlichungstag der Anmeldung: 16.11.2005
(73) Patentinhaber: Steris GmbH, 50354 Hürth (DE)
(72) Erfinder: SELCH, Johannes, 64319 Pfungstadt-Eschollbrücken (DE)
(74) Vertreter: Leineweber, Jürgen
(86) Internationale Anmeldenummer: PCT/EP2004/001058
(87) Internationale Veröffentlichungsnummer: WO 2004/074143

(56) Entgegenhaltungen:
- EP-A- 0 391 208
- WO-A-96/35090
- GB-A- 2 185 969

## Beschreibung

Die Erfindung bezieht sich auf eine Einrichtung mit mindestens einer Stellfläche für Behälter sowie mit einer der Beladung und/oder Entladung der Stellfläche dienenden Vorrichtung, die ein auf die Stellfläche aufschiebbares und wieder zurückziehbares Bauteil sowie einen Antrieb dafür umfasst.

Eine Einrichtung mit diesen Merkmalen ist aus der GB 2 185 969 A bekannt. Sie ist mit mehreren nebeneinander angeordneten Be-/Entladevorrichtungen ausgestattet. Bestandteile dieser Vorrichtungen sind jeweils ein hin- und herverschiebbares, rechteckförmigps Blech aus Stahl oder Kunststoff sowie ein System aus ausfahrbaren und anhebbaren Anschlägen, jeweils mit ihren zugehörigen Antrieben. Bei der Beladung der Stellflächen werden die Behälter von einem Förderband auf das Blech und mit Hilfe des Blechs auf die Stellflächen transportiert. Das Blech wird danach zurückgezogen. Bei der Entladung erfolgt dieser Bewegungsablauf in umgekehrter Richtung.

Ein weiteres Beispiel für eine Einrichtung der hier betroffenen Art ist eine Gefriertrocknungseinrichtung, wie sie in der EP-B1-391 208 (US-A1-5129162) beschrieben ist. Die Stellflächen derartiger Gefriertrocknungseinrichtungen müssen mit einer Vielzahl von Behältern, in denen sich das zu gefriertrocknende Produkt befindet, beladen werden. Nach dem Schließen der Kammer und nach der Durchführung der Gefriertrocknung besteht die Notwendigkeit der Entladung. Wegen der inzwischen überaus großen Vielzahl der Behälter, die bei einer Charge be- und entladen werden müssen, erfolgen diese Prozesse nicht mehr von Hand. Die Behälter werden auf Förderbändern angeliefert und abgeführt. Mit Hilfe von Schieber-Bauteilen erfolgt der Transfer der Behälter vom Förderband auf die in der Kammer befindlichen Stellflächen und - nach der Durchführung des Gefriertrocknungsprozesses - wieder zurück.

Das Beladen der Stellflächen von Gefriertrocknungskammern oder ähnlichen Einrichtungen hat unter extrem reinen Bedingungen stattzufinden, da die Behälter bzw. Flaschen mit dem zu gefriertrocknenden Produkt zunächst noch offen sind. Üblicherweise liegt der Öffnung der Behälter ein Stopfen auf, der eine Aussparung zur Abführung des Wasserdampfes aufweist. Nach der Durchführung des Gefriertrocknungsprozesses erfolgt das Verschließen der Stopfen bei noch geschlossener Kammer, indem die Stellflächen zusammengefahren werden. Obwohl die Behälter bereits verschlossen sind, erfolgt auch das Entladen der Stellflächen und die Zuführung der Behälter zu einer Vorrichtung, in der die Behälter mit Kappen versehen werden, unter ReinraumBedingungen. Gefriertrocknungseinrichtungen sind deshalb - wenn sie sich nicht in Reinräumen befinden - mit Isolatoren ausgerüstet. Der vorzugsweise von durchsichtigen Wandungsabschnitten gebildete Isolatorraum umschließt diejenigen Bereiche der Gefriertrocknungseinrichtung, in denen ReinraumBedingungen aufrechterhalten werden sollen. Dazu gehören auch die Mittel für die Zu- und Abführung der Behälter. Im Vergleich zu den üblichen Reinräumen hat der Isolator den Vorteil, dass das erforderliche Reinraumvolumen maßgeblich kleiner ist.

Bei Gefriertrocknungseinrichtungen und Einrichtungen ähnlicher Art sind immer wieder die Antriebe für die zu verschiebenden Bauteile problematisch. Bei der vorbekannten Gefriertrocknungseinrichtung wird ein Spindelantrieb verwendet. Auch der Einsatz von Zahnstangen ist bekannt. Antriebe dieser Art sind platzaufwendig. Außerdem weisen sie relativ enge Vertiefungen auf, die lange Sterilisationszeiten erfordern. Da auch Schmiermittel zu Verunreinigungen führen, müssen Antriebe dieser Art "trocken" betrieben werden. Die Folge ist ein erhöhter Abrieb, der ebenfalls Verunreinigungen verursacht.

Der vorliegenden Erfindung liegt die Aufgabe zugrunde, ein Antriebssystem für Einrichtungen der hier betroffenen Art so zu gestalten, dass die geschilderten Nachteile weitestgehend beseitigt sind.

Erfindungsgemäß wird diese Aufgabe durch die kennzeichnenden Merkmale der Patentansprüche gelöst.

Ein besonderer Vorteil der erfindungsgemäßen Lösung besteht darin, dass das Antriebssystem insgesamt platzsparend in einem oder zwei voneinander lösbaren Gehäusen untergebracht werden kann. Das Gelenksystem, das aus starren, gelenkig miteinander verbundenen Elementen besteht, erlaubt es, sowohl Druck- als auch Zugkräfte zu übertragen. Entladetiefen von mehreren Metern können überbrückt werden. Das Gelenksystem selbst kann in Bezug auf die Ausbildung der Gelenke und die Werkstoffauswahl derart ausgebildet werden, dass ein Abrieb praktisch nicht mehr erfolgt, Abriebpartikel also nicht in die Nähe des Produktes gelangen können, zumal im eingefahrenen Zustand Gelenkbewegungen nicht mehr stattfinden. Die Erfindung erlaubt eine ModulBauweise. Antriebsrad und Aufwickelvorrichtung für die Gliederkette können in separaten, von der Einrichtung lösbaren Gehäusen untergebracht werden und damit unabhängig von der Einrichtung gereinigt bzw. sterilisiert werden. Die Innenräume der Gehäuse können Bestandteile des Isolatorraumes sein. Nur eine Drehdurchführung nach außen ist für das Antriebsrad erforderlich, so dass die Gefahr des Eindringens von kontaminierter Luft in den Isolator auf ein Minimum reduziert ist.

Die Erfindung ist überall dort einsetzbar, wo Stellflächen mit Behältern, seien es Fläschchen, Schalen o.dgl., be- und/oder entladen werden müssen. Besonders vorteilhaft ist ihr Einsatz bei Einrichtungen mit Isolatoren. Gefriertrockner, Sterilisatoren, Waschanlagen oder Speichereinheiten mit Be- oder Entladetischen, Formatiertischen, Chargiertischen, Förderbandsystemen und Arbeitsflächen gehören zu derartigen Einrichtungen. Wird die mit den Stellflächen ausgerüstete Einrichtung von einer Seite be- und entladen, kann für beide Vorgänge das vom Antrieb über die Gelenksysteme bewegte Bauteil eingesetzt werden. Wird eine Stellfläche von verschiedenen Seiten be- bzw. entladen, dient der Schlitten vorzugsweise dem Entladevorgang, da er relativ große Entladetiefen überbrücken kann.

Weitere Vorteile und Einzelheiten der Erfindung sollen anhand der Figuren 1 bis 10 erläutert werden. Als Ausführungsbeispiel ist schematisch eine Gefriertrocknungseinrichtung dargestellt. Es zeigen:
- Figur 1 einen Schnitt durch die Gefriertrocknungseinrichtung nach der Erfindung,
- Figur 2 einen Teilschnitt durch eine Gefriertrocknungseinrichtung mit einer Stellfläche, die sich in der Beladephase befindet,
- Figur 3 eine Draufsicht auf die Beladeebene nach Figur 2,
- Figur 4 einen Schnitt durch eine Gefriertrocknungseinrichtung mit einer Stellfläche, die sich in der Entladephase befindet,
- Figur 5 eine Draufsicht auf die Entladeebene nach Figur 4,
- Figuren 6 und 6a zwei Ausführungen für Teilansichten eines Entladeschlittens mit unterschiedlichen Ausführungen für Visiervorrichtungen,
- Figuren 7 und 8 Schnitte durch eine der Antriebsvorrichtungen für den Entladeschlitten sowie,
- Figuren 9 und 10 Ansichten von Abschnitten der Gelenksysteme.

Die in den Figuren dargestellte Gefriertrocknungseinrichtung ist mit 1 bezeichnet. Sie umfasst eine nur teilweise dargestellte Kammer 2, in der sich die Stellflächen 3 befinden. Auf einer der Stellflächen sind beispielhaft Behälter 4 dargestellt. Durch seitliche Stege 5 sind die Behälter 4 geführt.

Mit Hilfe einer im einzelnen nicht näher dargestellten Zylinder-Kolbeneinrichtung sind die Stellflächen 3 in Bezug auf ihre Höhe einstellbar. Diese Höheneinstellung erlaubt es zum einen, die einzelnen Stellflächen 3 auf eine bestimmte Be- bzw. Entladehöhe einzustellen (Beladeöffnung 6). Zum anderen können die Stellflächen 3 mit Hilfe der Zylinder-Kolbeneinrichtung nach der Durchführung der Gefriertrocknung zusammengeschoben werden, um die Behälter 4 zu schließen.

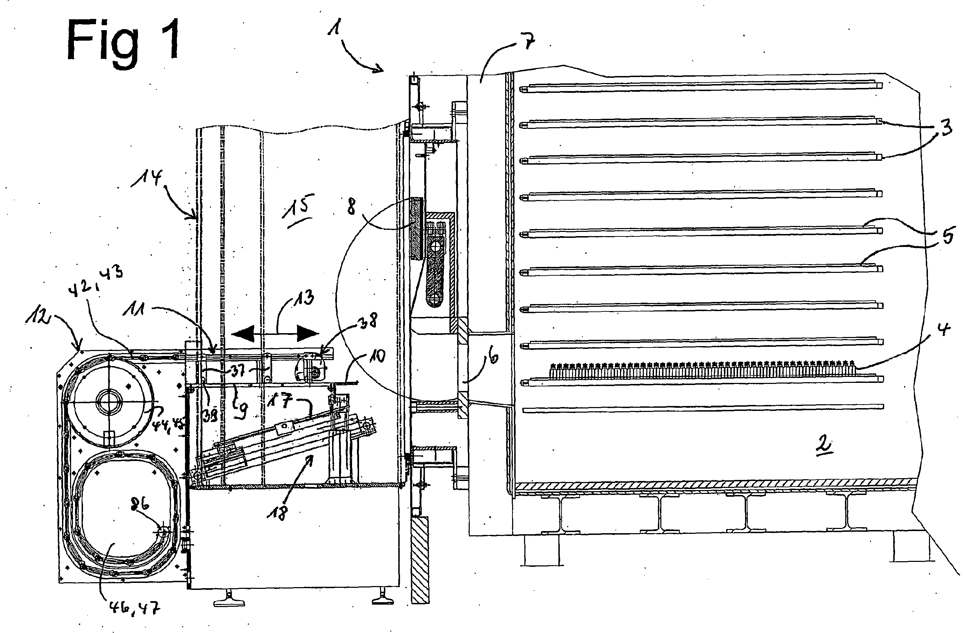

Frontseitig besitzt die Kammer 2 eine vakuumdicht verschließbare Tür 7, die mit der Beladeöffnung 6 ausgerüstet ist. Diese ist ihrerseits mit der Klappe 8 verschließbar. In Höhe der Beladeöffnung 6 befinden sich vor der Gefriertrocknungseinrichtung 1 Be- und Entladeeinrichtungen, die eine Arbeitsebene 9, ein an die Ebene 9 angrenzendes, der Zu- und Abführung der Behälter 4 dienendes Förderbandsystem 10 sowie Schiebebauteile umfassen. Figur 1 lässt bereits das als Schlitten ausgebildete Bauteil 11 erkennen, dessen Antriebssystem mit 12 bezeichnet ist. Der Schlitten 11 dient - wie weiter unten noch beschrieben - der Entladung der Stellflächen 3. Der Doppelpfeil 13 deutet seine Bewegungsrichtungen an. In seiner zurückgezogenen Stellung - wie dargestellt - stützt er sich auf der Arbeitsebene 9 ab.

In Figur 1 ist der Isolator 14 angedeutet. Er bildet den Isolatorraum 15, der den der Beladeöffnung 6 vorgelagerten Bereich umgibt. Die Gefriertrocknungskammer 2 bildet eine seitliche Wandung des Isolators 14. Die Beladeöffnung 6 mündet in den Isolatorraum 15. Der Isolatorraum 15 erstreckt sich üblicherweise entlang des Förderbandsystems 10, und zwar auf der Zuführungsseite bis zur Fülleinrichtung für die Behälter und auf der Abführungsseite bis zur Kappen-Verschlussvorrichtung. Die Wandungen des Isolators 14 bestehen zweckmäßig aus durchsichtigem, sterilisierbarem Kunststoff, z.B. Polyethylen.

Während der Be- und Entladephase muss der Raum zwischen dem Förderband 10 und der jeweiligen Stellfläche 3 durch die Beladeöffnung 6 hindurch überbrückt werden. Dieses geschieht mit Hilfe einer verschiebbaren und ihrem Winkel einstellbaren Platte 17. Das nur schematisch angedeutete Antriebssystem 18 stützt sich unterhalb der Beladeebene ab. Auch die Platte 17 befindet sich - wie dargestellt - in ihrer Ruhestellung unterhalb der Beladeebene. Wie die Stellflächen 3 ist sie mit seitlichen Stegen ausgerüstet, die ein seitliches Herabfallen der Behälter 4 verhindern.

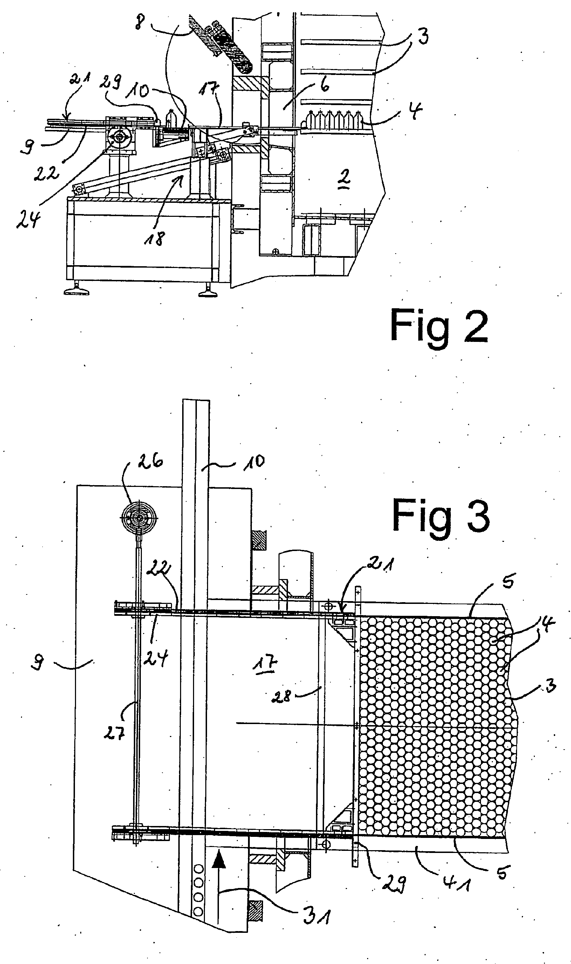

Anhand der Figuren 2 und 3 sollen weitere Details des Ausführungsbeispieles nach Figur 1 sowie die Beladung einer Stellfläche 3 erläutert werden. Zur Beladung wird nicht der Schlitten 11 eingesetzt; sie erfolgt mit Hilfe eines Schiebers 21.. In den Figuren 2, 3 ist der der Entladung dienende Schlitten 11 aus Gründen der Übersichtlichkeit nicht dargestellt. Schlitten 11 und Schieber 21 sind derart bemessen, das sie einander in ihrer Bewegung nicht behindern.

Der Schieber 21 ist seitlich mit Zahnstangen 22 ausgerüstet, welche mit Zahnrädern 24 in Eingriff stehen. Die Zahnräder 24 befinden sich unterhalb der Arbeitsebene 9 und greifen durch Öffnungen bis zu den Zahnstangen 22 hindurch. Unterhalb der Arbeitsebene 9 befinden sich ebenfalls der Antrieb 26 sowie die Welle 27 (Figur 3), über die die Zahnräder 24 synchron angetrieben werden. Der Schieber 21 ist als stabiles Gestell mit einer Querstange 28 und der vorderen Frontleiste 29 aufgebaut.

Dieses Kraftübertragungs-System kann auch ersetzt werden durch in sich gekoppelte Zahnriehmen oder Spindeleinheiten.
Zudem kann die Welle 27 mechanisch und elektrisch (bei elektrischer Ausführung mittels zwei Antrieben) ausgeführt werden.

Zur Beladung einer Stellfläche 3 müssen die vom Förderband 10 angelieferten Behälter 4 zunächst mit Hilfe des Schiebers 21 auf die Stellfläche 3 geschoben werden. Dieses geschieht nach dem Öffnen der Beladeöffnung 6, der Einstellung einer leeren Stellfläche 3 auf ihre Beladehöhe und dem Einfahren der Platte 17 in ihre Betriebsstellung. Danach wird eine nicht dargestellte Sperre geschlossen, die sich auf der in Förderrichtung (Pfeil 31 in Figur 3) abgewandten Seite der Stellfläche 3 befindet. Das Schließen dieser Sperre hat die Wirkung, dass sich die der Stellfläche 3 vorgelagerte Oberfläche des Förderbandes 10 mit Behältern 4 füllt. Ist sie gefüllt, wird das Förderband 10 angehalten. Der Schieber 21 schiebt die Behälter 4 auf die Stellfläche 3. Die Stege 5 sowohl auf der Platte 17 als auch auf der Stellfläche 3 verhindern ein seitliches Herabfallen der Behälter 4.

In der vorstehend beschriebenen Weise werden alle Stellflächen 3 nacheinander beladen. Ist die Beladung abgeschlossen, erfolgen das Absenken und Zurückziehen der Platte 17, das Verschließen der Beladeöffnung 6 mit Hilfe der Klappe 8 und die Durchführung der Gefriertrocknung des in den Behältern 4 befindlichen Produkts.

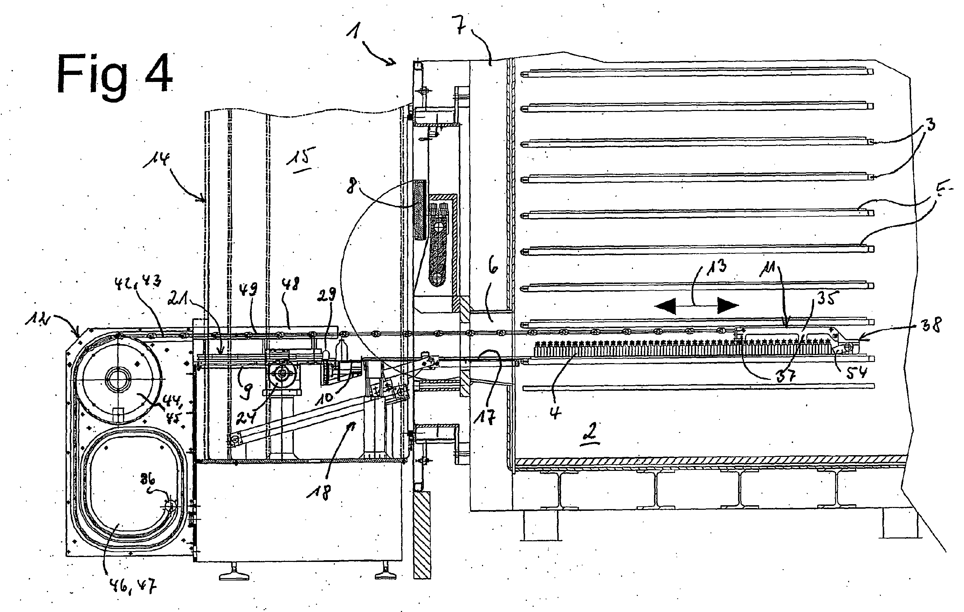

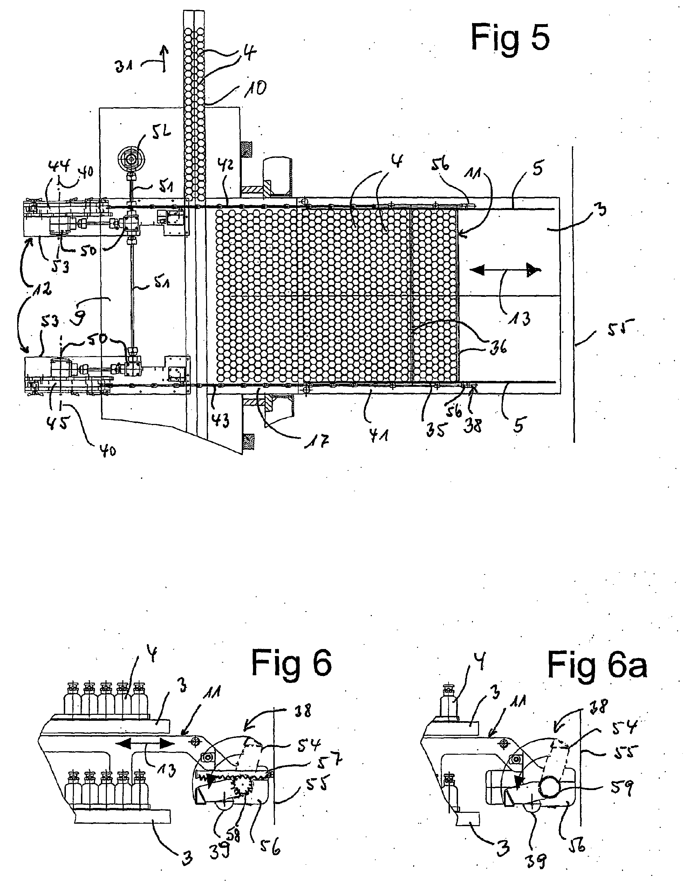

Wie bereits erwähnt, dient der in Figur 1 dargestellte Schlitten 11 der Entladung der Stellfläche 3 nach der Durchführung der Gefriertrocknung und nach dem Verschließen der Behälter 4. Anhand der Figuren 4 und 5 soll der Entladevorgang beschrieben werden.

In Figur 1 ist der Schlitten 11 in seiner zurückgezogenen Position, in den Figuren 4 und 5 in in die Kammer 2 eingefahrenen Positionen dargestellt. Seine Bewegungsrichtungen kennzeichnet der Doppelpfeil 13. Der Schlitten 11 ist als stabiles Gestell mit Längs- und Querstegen 35, 36 sowie mit Stützen 37 ausgebildet. Frontseitig weist er eine Visiervorrichtung 38 auf (siehe auch Figur 1). Die unteren Enden der Stützen sind mit Rollen 39 - vorzugsweise aus Kunststoff - ausgerüstet, mit denen sich der Schlitten 11 auf seinen Unterlagen (Arbeitsebene 9, Platte 17, Stellflächen 3) abstützt. Die Höhe der Quer- und Längsstege 35, 36 des Schlittens 11 ist so gewählt, dass zum einen der im Bereich der Arbeitsebene 9 befindliche Schieber 21 und zum anderen die Behälter 4 darunter Platz finden. Der Abstand der Stützräder 39 ist so gewählt, dass sich der Schlitten 11 während seiner Bewegung innerhalb der Kammer 2 seitlich auf den Stellflächen 3 abstützt, und zwar außerhalb der Stege 5 befindlichen Rändern 41. Ähnliche Außenränder besitzt auch die Platte 17.

Der Verschiebung des Schlittens 11 dient das Antriebssystem 12. Es umfasst zwei Gelenksysteme 42, 43, deren freie Enden seitlich am Schlitten 11 - z.B. an den Längsstegen 35 - befestigt sind. Jedem der Gelenksysteme 42, 43 ist ein Antriebsrad 44 bzw. 45 sowie ein darunter befindliches Aufrollsystem 46, 47 zugeordnet. Dieses weiter unten noch im Detail beschriebene Antriebssystem 12 erlaubt die Übertragung von Zug- und Druckkräften auf den Schlitten 11, und zwar über die relativ weite, für den Entladevorgang notwendige Strecke, ohne dass die Gefahr des Entstehens von Abriebpartikeln in die Nähe des Produkts besteht.

Die Gelenksysteme 42, 43 umfassen starre, gelenkig miteinander verbundene Bauteile bzw. Elemente. Sie bestehen - wie auch der Schlitten 11 - aus VA-Stahl mit gerundeten Oberflächen, um gute Sterilisationsergebnisse zu erzielen.

Die Figuren 4 und 5 zeigen den Schlitten 11 jeweils in einer Stellung, in der er in die Kammer 2 eingefahren ist. Der der Beladung dienende Schieber 21 befindet sich in seiner zurückgezogenen Stellung (Figur 4). Oberhalb der Arbeitsebene 9 befinden sich seitlich neben den Gelenksystemen 42, 43 erstreckende Stangenabschnitte 48 mit Nuten 49, in denen die Gelenksysteme 42, 43 in ihrer ausgezogenen Stellung oder der Schlitten 11 in seiner zurückgezogenen Stellung geführt sind. Dem Antrieb der Gelenksysteme 42, 43 dienen die Antriebsräder 44, 45. Ihre Drehachsen 40 sind im wesentlichen senkrecht zur Bewegungsrichtung (Doppelpfeil 13) des Schlittens 11 ausgerichtet. Antriebsräder 44, 45 und Aufrollsysteme 46, 47 liegen in einer Ebene. Der Erzeugung der synchronen Drehbewegung der Antriebsräder 44, 45 dienen aus Getrieben 50 und Wellenabschnitten 51 bestehende Antriebsmittel, die mit dem Antriebsmotor 52 gekoppelt sind (Fig. 5). Die Erzeugung der synchronen Drehbewegung kann auch mittels elektrischer Verbindung (mittels zwei Antrieben) erzeugt werden.

Sowohl die beschriebenen Antriebsmittel als auch die jeweiligen Antriebsräder 44, 45 mit ihren Aufrollsystemen 46, 47 befinden sich in Teilräumen des Isolators 14. Entsprechende Wandungsabschnitte sind mit 53 bezeichnet.

Die Entladung der Kammer 2 erfolgt nach der Durchführung der Gefriertrocknung, der Belüftung der Kammer 2, dem Öffnen der Beladeöffnung 6 und dem Einfahren der Platte 17 in seine Betriebsstellung. Jede der Stellflächen 3 wird nacheinander in die Be- bzw. Entladehöhe gefahren und folgendermaßen entladen: Der Schlitten 11 wird in die Kammer 2 eingefahren, und zwar so weit, bis sich seine Visiervorrichtung 38 (siehe auch Figuren 6 und 6a) - von der Beladeöffnung 6 her gesehen - hinter dem Behälterpaket befindet. Bestandteil der Visiervorrichtung 38 ist ein Visier 54, das sich während des Einfahrens des Schlittens 11 in die Kammer 2 in seiner angehobenen Stellung befindet und die Behälter 4 nicht berührt. Durch den Kontakt der Visiervorrichtung 38 mit der Kammerrückwand 55 wird das Absenken des Visiers 54 ausgelöst. Danach erfolgt das Zurückziehen des Schlittens 11, entweder abschnittsweise um etwa die Breite des Förderbandes 10 oder so langsam, dass die Behälter 4 bei laufendem Förderband 10 störungsfrei abgefördert werden können. Während seiner Bewegung ist der Schlitten ständig seitlich geführt, und zwar auf den Stellflächen 3 und der Platte 17 durch die jeweiligen seitlichen Stege, auf der Arbeitsebene 9 durch die Stangenabschnitte 48.

In den Figuren 6 und 6a sind die Visiervorrichtungen 38 jeweils vergrößert dargestellt. Bestandteil der Visiervorrichtung 38 sind seitliche Trägerscheiben 56, in denen das Visier 54 drehbar gelagert ist. Das Visier 54 ist sowohl in seiner angehobenen (gestrichelt) als auch in seiner abgesenkten Stellung dargestellt. Die Betätigung des Visiers 54 ist derart ausgebildet, dass es nicht erforderlich ist, Kabelverbindungen über die Behälter 4 zu schleppen. Figur 6 zeigt eine mechanische Lösung. Eine in Richtung des Doppelpfeiles 13 verschiebbare Zahnstange 57, z.B. Rundzahnstange, steht mit einem Zahnrad 58 in Eingriff. Während des Einfahrens des Schlittens 11 in die Kammer 2, d.h. bei angehobenem Visier 54 (gestrichelt), ragt die Zahnstange 57 aus der Frontseite der Trägerscheibe 56 hervor. Durch ihren Kontakt mit der Kammerrückwand 55 wird die Zahnstange relativ zur Trägerscheibe 57 zurückbewegt und bewirkt über das Zahnrad 58 das Absenken des Visiers 54. Danach erfolgt der Beginn der Rückwärtsbewegung des Schlittens 11 - veranlasst beispielsweise durch einen Stellungsgeber des Antriebssystems 12 - und der bereits beschriebene Entladevorgang.

Anhand der Figur 6a soll eine elektrische Lösung für die Betätigung des Visiers 54 beschrieben werden, die dennoch den Vorteil hat, dass auf Kabelschlepps verzichtet werden kann. Die Trägerscheibe 56 trägt einen Stellmotor 59, der mit dem Visier 54 gekoppelt ist. Seine Betätigung erfolgt beispielsweise mit Hilfe des bereits erwähnten Gebers am Antriebssystem 12. Der Übertragung von Signal- und Betätigungsströmen dienen die Gelenksysteme 42, 43, je nach Ausführung zumindest eines dieser Systeme, sowie die Längsstege 35 des Schlittens 11. Voraussetzungen für die Lösung sind, dass die Gelenksysteme - unabhängig von ihrer sonstigen Gestaltung - sowie die Längsstege 35 des Schlittens 11 elektrisch leitend sind und bezüglich anderer Bauteile, mit denen sie Kontakt haben, elektrische Isolationen vorhanden sind. Um den Kontakt zwischen einem Gelenksystem 42, 43 und einer Stromquelle oder einer Steuereinrichtung herzustellen, ist im Bereich der Arbeitsebene 9 z.B. ein - nicht dargestellter - Kontakt vorgesehen.

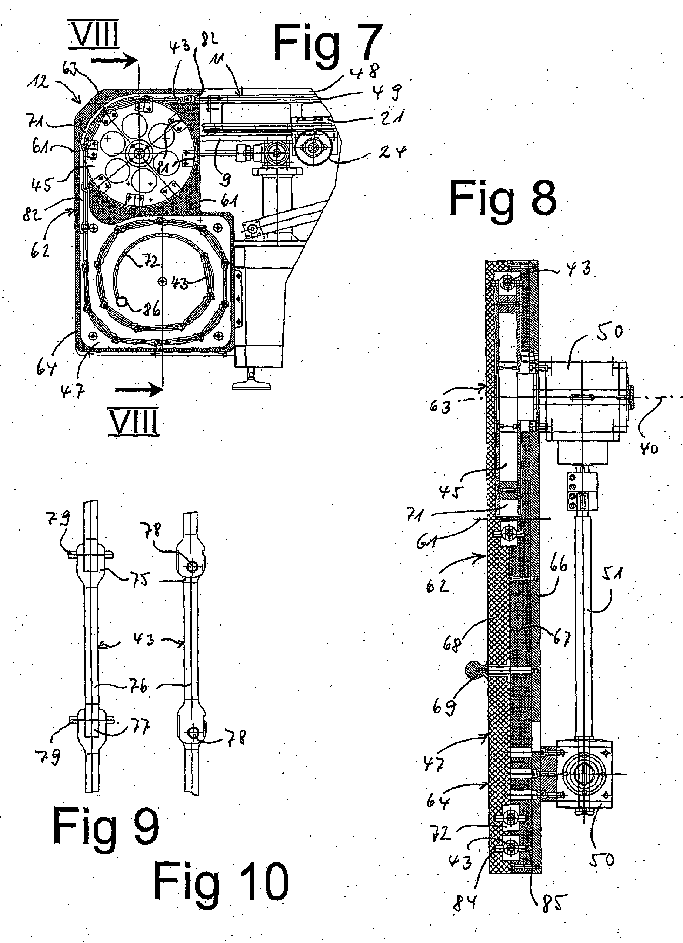

Die Figuren 7 und 8 zeigen Einzelheiten eines Antriebsrades 45 für die Gliederkette 43 und seines zugehörigen Aufrollsystems 47. Bei der Figur 8 handelt es sich um einen Querschnitt entsprechend der Linie VIII-VIII in Figur 7. Figur 8 zeigt weiterhin Teile der Antriebsmittel 50, 51. Antriebsrad 45 und Aufrollsystem 47 befinden sich in einem entlang der Linien 61 teilbaren Gehäuse 62, so dass sie jeweils in einer separaten Kassette 63, 64 untergebracht sind. Das Gehäuse 62 umfasst eine Grundscheibe 66, auf der zwei weitere Scheiben 67 und 68 lösbar (Schraubverbindungen 69) befestigt sind. Die einander zugewandten Seiten der Scheiben 67,68 sind mit Ausnehmungen versehen, die im Bereich der Kassette 63 einen das Antriebsrad 45 aufnehmenden Hohlraum 71 und im Bereich der Kassette einen spiralförmigen Hohlraum 72 zur Aufnahme der Gliederkette 43 bilden. Als Werkstoff für das Gehäuse 62 wird zweckmäßig ein sterilisierbarer Kunststoff verwendet.

Die Gelenksysteme 43, 44 bestehen - wie in den Figuren 9, 10 zum Gelenksystem 43 dargestellt - aus gelenkig miteinander verbundenen Stangenabschnitten 76, deren eines Ende 75 U-förmig und deren anderes Ende einen Abschnitt 77 mit ebenen Seitenflächen aufweist. Gemeinsam mit einem beide Endstücke 75, 77 durchsetzenden Stift 78 bilden sie die jeweiligen Gelenke. Die Stifte 78 ragen seitlich aus den Gelenksystemen 43, 44 hervor. Sie bilden Stümpfe 79, die zur Führung der Gelenksysteme 43, 44 verwendet werden.

Um Zug- und Druckkräfte auf das Gelenksystem 43 ausüben zu können, weist das Antriebsrad 45 periphere Ausnehmungen 81 im Abstand der Stümpfe 79 auf. Die von unten aus der Öffnung 82 in der Kassette 64 aus- bzw. eintretende Kette 43 greift über einen Teilumfang des Antriebsrades 45 mit ihren Stümpfen 79 in die Ausnehmungen 81 ein, so dass eine kraftschlüssige Verbindung vorhanden ist. Die Ein-, Austrittsöffnung für die Kette 43 aus der Kassette 63 ist mit 82 bezeichnet (Figur 7).

Im Bereich der Kassette 64 ist der spiralförmige Hohlraum 72 mit seitlichen Nuten 84, 85 ausgerüstet. In diese Nuten greifen die Stümpfe 79 der Kette 43 ein, so dass die Kette 43 platzsparend in der Kassette 64 untergebracht werden kann.

Im Bereich des inneren Endes des spiralförmigen Hohlraumes 72 befindet sich eine Öffnung 86. An diese Öffnung ist eine Einrichtung angeschlossen, die den Isolatorraum 15 mit sterilen Gasen, z.B. sterile Luft, versorgt. Dadurch, dass zumindest ein Teil dieser Gase durch die Öffnung 86 eintritt, können auch die Hohlräume 72 und 71 in den Kassetten 64, 63 insbesondere während des Betriebs steril gehalten werden. Außerhalb der Betriebszeiten wird der Innenraum des Isolators 14 dekontaminiert. Während dieser Prozesse werden Sterilisationsgase, z.B. Wasserstoffperoxid, eingelassen. Dieses geschieht ebenfalls durch die Öffnungen 86, so dass die Hohlräume 71 und 72 einbezogen sind

## Patentansprüche

1. Einrichtung (1) mit mindestens einer Stellfläche (3) für Behälter (4) sowie mit einer der Beladung und/oder Entladung dienenden Vorrichtung, die ein auf die Stellfläche (3) aufschiebbares und wieder zurückziehbares Bauteil (11) sowie einen Antrieb (12) dafür aufweist, **dadurch gekennzeichnet, dass** Bestandteile des Antriebs (12) mindestens ein Antriebsrad (44, 45), ein Gelenksystem (42, 43) und ein Aufrollsystem (46, 47) für das Gelenksystem (42, 43) sind, dass das Antriebsrad (44, 45) um eine sich etwa senkrecht zur Bewegungsrichtung des Bauteils (11) erstreckende Achse (40) drehbar ist und dass das Aufrollsystem (46,47) in der Ebene des Antriebsrades (44, 45) angeordnet ist.

2. Einrichtung nach Anspruch 1, **dadurch gekennzeichnet, dass** sich auf der Be-/Entladeseite der Stellfläche (3) eine Arbeitsebene (9) und ein Förderbandsystem (10) befinden.

3. Einrichtung nach Anspruch 2, **dadurch gekennzeichnet, dass** das zwischen der Arbeitsebene (9) und der Stellfläche (3) befindliche Förderbandsystem (10) an die Arbeitsebene (9) angrenzt und dass eine verstellbare Platte (17) vorgesehen ist, die in ihrer Betriebsstellung den Raum zwischen dem Förderbandsystem (10) und der Stellfläche (3) überbrückt.

4. Einrichtung nach Anspruch 3, **dadurch gekennzeichnet, dass** die Stellfläche (3) und die Platte (17) mit seitlichen Stegen zur Führung der Behälter (4) ausgerüstet sind und dass sich außerhalb der Stege Randbereiche befinden, auf denen sich das verschiebbare Bauteil (11) abstützt.

5. Einrichtung nach einem der vorhergehenden Ansprüche, **dadurch gekennzeichnet, dass** das Bauteil (11) ein aus Längs- und Querstegen (35, 36) bestehender Schlitten ist, der sich über Stützen (3.7) und Rollen (39) auf seiner Unterlage abstützt.

6. Einrichtung nach Anspruch 5, **dadurch gekennzeichnet, dass** jeder der Längsstege (35) des Schlittens (11) mit einem der beiden Gelenksysteme (42, 43) in Verbindung steht.

7. Einrichtung nach Anspruch 5 oder 6, **dadurch gekennzeichnet, dass** die Frontseite des Schlittens (11) mit einer Visiervorrichtung (38) ausgerüstet ist, die ein in zwei Positionen einstellbares Visier (54) trägt.

8. Einrichtung nach Anspruch 7, **dadurch gekennzeichnet, dass** das Visier (54) mechanisch betätigbar ist.

9. Einrichtung nach Anspruch 8, **dadurch gekennzeichnet, dass** die Visiervorrichtung (38) mit einer längsgerichteten Zahnstange (57) ausgerüstet ist, die mit einem mit dem Visier (54) verbundenen Zahnrad (58) in Eingriff steht.

10. Einrichtung nach Anspruch 9, **dadurch gekennzeichnet, dass** die Visiervorrichtung elektrisch betätigbar ist.

11. Einrichtung nach Anspruch 10, **dadurch gekennzeichnet, dass** die Visiervorrichtung mit einem Stellmotor (59) zur Einstellung des Visiers (54) in eine seiner beiden Positionen ausgerüstet ist und dass mindestens eines der beiden Gelenksysteme (42, 43) als Leiter für die Übertragung von Signal- und/oder Betätigungsströmen verwendet wird.

12. Einrichtung nach einem der vorhergehenden Ansprüche, **dadurch gekennzeichnet, dass** Bestandteile des Gelenksystems (42, 43) starre, gelenkig miteinander verbundene Bauteile (76), vorzugsweise aus VA-Stahl mit gerundeten Oberflächen, sind.

13. Einrichtung nach Anspruch 12, **dadurch gekennzeichnet, dass** Bestandteil der Gelenke Stahlstifte (78) sind, die in Form seitlicher Stümpfe (79) aus den Gelenken hervorragen.

14. Einrichtung nach Anspruch 13, **dadurch gekennzeichnet, dass** das Antriebsrad (44, 45) mit peripheren Ausnehmungen (81) im Abstand der Stümpfe (79) ausgerüstet ist.

15. Einrichtung nach Anspruch 13 oder 14, **dadurch gekennzeichnet, dass** Bestandteil des Aufrollsytems (46, 47) ein spiralförmiger Hohlraum (72) mit seitlichen Nuten (84, 85) ist, in denen die Stümpfe (79) des -Gelenksystems (42, 43) geführt sind.

16. Einrichtung nach einem der vorhergehenden Ansprüche, **dadurch gekennzeichnet, dass** für das Antriebsrad (44, 45) und für das Aufrollsystem (46, 47) ein Gehäuse (62) vorgesehen ist und dass sich im Gehäuse Hohlräume (71, 72) befinden, die der Aufnahme des Antriebsrades (44, 45) bzw. des Gelenksystems (42, 43) dienen.

17. Einrichtung nach Anspruch 16, **dadurch gekennzeichnet, dass** das Gehäuse (62) aus zwei lösbar miteinander verbundenen Teilgehäusen (63, 64) besteht, von denen eines den Hohlraum (71) und das andere den spiralförmigen Hohlraum (72) aufweist, und dass beide Gehäuseteile (63, 64) lösbar an der Einrichtung (1) befestigt sind.

18. Einrichtung nach einem der vorhergehenden Ansprüche, **dadurch gekennzeichnet, dass** sie mit einem Isolator (14) ausgerüstet ist.

19. Einrichtung nach Anspruch 18 und einem der Ansprüche 16 oder 17, **dadurch gekennzeichnet, dass** die Hohlräume (71, 72) im Gehäuse (62) Bestandteile des Isolatorraums (15) sind.

20. Einrichtung nach Anspruch 19, **dadurch gekennzeichnet, dass** sich im Bereich des inneren Endes des spiralförmigen Hohlraums (72) eine Öffnung (86) befindet, die mit einer Quelle für sterile Gase verbindbar ist.

21. Einrichtung nach einem der vorhergehenden Ansprüche, **dadurch gekennzeichnet, dass** sie zusätzlich mit einem der Beladung der Stellfläche (3) dienenden Schieber (21) ausgerüstet ist.

22. Einrichtung nach Anspruch 21, **dadurch gekennzeichnet, dass** das Bauteil (11) und der Beladeschieber (21) sich auf der Beladeseite befinden und derart ausgebildet sind, dass sie einander bei ihrer Bewegung nicht behindern.

23. Einrichtung nach einem der vorhergehenden Ansprüche, **dadurch gekennzeichnet, dass** sie als Gefriertrocknungseinrichtung (1) mit einer Kammer (2) ausgebildet ist, in der sich eine Mehrzahl übereinander angeordneter Stellflächen (3) befinden.

24. Einrichtung nach Anspruch 23, **dadurch gekennzeichnet, dass** die Kammer (2) mit einer Be-/Entladeöffnung (6) ausgerüstet ist, der die Vorrichtungen zur Be- und/oder Entladung vorgelagert sind.

## Claims

1. Apparatus (1) having at least one set-down area (3) for containers (4) and a device employed for the loading and/or unloading process, said apparatus being provided with a sliding component (11) which can be moved onto, and back off, the supporting surface (3) with the help of a drive mechanism (12) provided for this purpose, **characterized by**
said drive mechanism (12) consisting of at least one drive wheel (44, 45), a chain-link system (42, 43) and a winding system (46, 47) for the chain-link system (42, 43),
said drive wheel (44, 45) being able to revolve around an axis (40) that extends approximately perpendicular to the direction of the motion of the sliding component (11),
said winding system (46, 47) being arranged in the plane of the drive wheel (44, 45).

2. Apparatus in accordance with claim 1, **characterized by**
a work level (9) and a conveyor belt system (10) being located on the loading and unloading side of the set-down area (3).

3. Apparatus in accordance with claim 2, **characterized by**
the conveyor belt system (10) between the work level (9) and the set-down area (3) adjoining the work level (9) and an adjustable plate (17) being provided which, in its operating position, bridges the gap between the conveyor belt (10) and the set-down area (3).

4. Apparatus in accordance with claim 3, **characterized by**
the set-down area (3) and the plate (17) being equipped with side bars to guide the containers (4), and that border zones exist outside of the side bars that serve as support for the sliding component (11).

5. Apparatus in accordance with anyone of the previous claims, **characterized by**
the sliding component (11) consisting of a carriage-slide built from longitudinal and transverse bars (35, 36), said carriage-slide being supported on its base by support pillars (37) and rollers (39).

6. Apparatus in accordance with claim 5, **characterized by** each one of the longitudinal bars (35) of the carriage-slide (11) being connected to one of the two chain-link systems (42, 43).

7. Apparatus in accordance with claim 5 or 6, **characterized by**
the front of the carriage-slide (11) being equipped with a visor device (38) which carries a visor (54) that can be set in two positions.

8. Apparatus in accordance with claim 7, **characterized by**
the visor (54) being designed to be actuated mechanically.

9. Apparatus in accordance with claim 8, **characterized by**
the visor device (38) being equipped with a longitudinally aligned gear rack (57) which engages in a pinion (58) that is attached to the visor (58).

10. Apparatus in accordance with claim 9, **characterized by**
the visor (54) being designed to be actuated electrically.

11. Apparatus in accordance with claim 10, **characterized by**
the visor device (38) being equipped with a servomotor (59) for setting the visor (54) in one of its two positions and
at least one of the two chain-link systems (42, 43) being used as conductor for the transmittal of signal and/or actuating currents.

12. Apparatus in accordance with anyone of the previous claims, **characterized by**
the chain-link systems (42, 43) being made up of rigid components (76), preferably of stainless steel with rounded corners, that are hinge-connected to each other.

13. Apparatus in accordance with claim 12, **characterized by** steel pins (78) being part of the hinge joints, said pins projecting from the joints in the form of lateral stubs (79).

14. Apparatus in accordance with claim 13, **characterized by** the drive wheel (44, 45) being provided with recesses (81) on its periphery that are angularly spaced to accommodate the lateral stubs (79).

15. Apparatus in accordance with claim 13 or 14, **characterized by**
the winding system (46, 47) being provided with a spiral shaped cavity (72) with lateral grooves (84, 85), said grooves guiding the respective stubs (79) of the two chain-link systems (42, 43).

16. Apparatus in accordance with anyone of the previous claims, **characterized by**
a housing (62) being provided for the drive wheel (44,45) and the winding system (46, 47) and said housing containing cavities (71, 72) for accommodating the drive wheel (44,45) and the chain-link systems (42, 43), respectively.

17. Apparatus in accordance with claim 16, **characterized by**
the housing (62) consisting of two housing parts (63, 64) that are detachably connected to each other, and the first of said housing parts containing the cavity (71) and the second housing part containing the spiral shaped cavity (72), and
both housing parts (63, 64) being detachably attached to the apparatus (1).

18. Apparatus in accordance with anyone of the previous claims, **characterized by**
being equipped with an insulating component (14).

19. Apparatus in accordance with claim 18 and one of the claims 16 or 17, **characterized by**
the cavities (71,72) in the housing (62) being integral parts of the insulated space (15).

20. Apparatus in accordance with claim 19, **characterized by**
an opening (86) being located near the inner end of the spiral shaped cavity (72) which can be connected to a source of sterile gases.

21. Apparatus in accordance with anyone of the previous claims, **characterized by**
being additionally equipped with a sliding device (21) for loading the set-down area (3).

22. Apparatus in accordance with claim 21, **characterized by**
the component (11) and the loading slide (21) being located on the loading side and designed such that they do not hinder each other in their movements.

23. Apparatus in accordance with anyone of the previous claims, **characterized by**
being designed as a freeze drying facility (1) with a chamber (2) in which a number of supporting surfaces (3) are arranged vertically over each other.

24. Apparatus in accordance with claim 23, **characterized by**
the chamber (2) being equipped with a loading and unloading opening (6) with the loading and unloading devices being arranged in front of said opening.

## Revendications

1. Installation (1) comprenant au moins un emplacement (3) pour des récipients (4) ainsi qu'un dispositif servant au chargement et au déchargement qui présente un composant (11) pouvant être poussé sur l'emplacement (3) et retiré de celui-ci ainsi qu'un entraînement (12) à cet effet, **caractérisée en ce que** les éléments constitutifs de l'entraînement (12) comprennent au moins une roue motrice (44, 45), un système d'articulation (42, 43) et un système d'enroulement (46, 47) pour le système d'articulation (42, 43), **en ce que** la roue motrice (44, 45) est mobile en rotation autour d'un axe (40) s'étendant sensiblement perpendiculairement à la direction de mouvement du composant (11), et **en ce que** le système d'enroulement (46, 47) est disposé dans le plan de la roue motrice (44, 45).

2. Installation selon la revendication 1, **caractérisée en ce qu'**un plan de travail (9) et un système de convoyage (10) sont situés du coté de chargement/déchargement de l'emplacement (3).

3. Installation selon la revendication 2, **caractérisée en ce que** le système de convoyage (10) situé entre le plan de travail (9) et l'emplacement (3) est adjacent au plan de travail (9), et **en ce qu'**un plateau réglable (17) est prévu qui, dans sa position de fonctionnement, recouvre l'espace entre le système de convoyage (10) et l'emplacement (3).

4. Installation selon la revendication 3, **caractérisée en ce que** l'emplacement (3) et le plateau (17) sont munis d'entretoises latérales pour guider les récipients (4), et **en ce qu'**à l'extérieur des entretoises on trouve des bordures sur lesquelles s'appuie le composant (11) déplaçable.

5. Installation selon l'une quelconque des revendications précédentes, **caractérisée en ce que** le composant (11) est un chariot qui comporte des longerons et des traverses (35, 36) et prend appui sur son support par des montants (37) et des galets (39).

6. Installation selon la revendication 5, **caractérisée en ce que** chacun des longerons (35) du chariot (11) est relié à l'un des deux systèmes d'articulation (42, 43).

7. Installation selon la revendication 5 ou 6, **caractérisée en ce que** la face frontale du chariot (11) est munie d'un dispositif de visée (38) qui porte un viseur (54) réglable dans deux positions.

8. Installation selon la revendication 7, **caractérisée en ce que** le viseur (54) peut être actionné mécaniquement.

9. Installation selon la revendication 8, **caractérisée en ce que** le dispositif de visée (38) est muni d'une crémaillère (57) longitudinale qui coopère avec une roue dentée (58) reliée au viseur (54).

10. Installation selon la revendication 9, **caractérisée en ce que** le dispositif de visée peut être actionné électriquement.

11. Installation selon la revendication 10, **caractérisée en ce que** le dispositif de visée est muni d'un servomoteur (59) pour régler le viseur (54) dans l'une de ses deux positions, et **en ce qu'**au moins l'un des deux systèmes d'articulation (42, 43) est utilisé pour servir de conducteur pour la transmission de courants de signalisation et/ou d'actionnement.

12. Installation selon l'une quelconque des revendications précédentes, **caractérisée en ce que** des éléments constitutifs du système d'articulation (42, 43) sont des composants (76) rigides reliés les uns aux autres de façon articulée, fabriqués de préférence en acier VA avec des surfaces arrondies.

13. Installation selon la revendication 12, **caractérisée en ce que** des tiges en acier (78) sont des éléments constitutifs des articulations, qui font saillie des articulations sous la forme d'embouts latéraux (79).

14. Installation selon la revendication 13, **caractérisée en ce que** la roue motrice (44, 45) est munie d'évidements (81) périphériques espacés de la distance des embouts.

15. Installation selon la revendication 13 ou 14, **caractérisée en ce qu'**un espace creux (72) en forme de spirale avec des rainures latérales (84, 85) dans lesquelles sont guidés les embouts (79) du système d'articulation (42, 43) est un élément constitutif du système d'enroulement (46, 47).

16. Installation selon l'une quelconque des revendications précédentes, **caractérisée en ce qu'**un boîtier (62) est prévu pour la roue motrice (44, 45) et pour le système d'enroulement (46, 47), et **en ce que** des espaces creux (71, 72) pour loger la roue motrice (44, 45) ou le système d'articulation (42, 43) se trouvent dans le boîtier.

17. Installation selon la revendication 16, **caractérisée en ce que** le boîtier (62) est composé de deux parties de boîtier (63, 64) reliées entre elles de façon amovible, dont une présente l'espace creux (71) et l'autre l'espace creux (72) en forme de spirale, et **en ce que** les deux parties de boîtier (63, 64) sont fixées de façon amovible sur l'installation (1).

18. Installation selon l'une quelconque des revendications précédentes, **caractérisée en ce qu'**elle est munie d'un isolateur (14).

19. Installation selon la revendication 18 et une des revendications 16 ou 17, **caractérisée en ce que** les espaces creux (71, 72) dans le boîtier (62) font partie de la chambre (15) de l'isolateur.

20. Installation selon la revendication 19, **caractérisée en ce que** dans la zone de l'extrémité intérieure de l'espace creux (72) en forme de spirale on trouve une ouverture (86) qui peut être reliée à une source pour des gaz inertes.

21. Installation selon l'une quelconque des revendications précédentes, **caractérisée en ce qu'**elle est en outre munie d'un poussoir (21) servant au chargement de l'emplacement (3).

22. Installation selon la revendication 21, **caractérisée en ce que** le composant (11) et le poussoir de chargement (21) sont situés du côté du chargement et formés pour ne pas se gêner lors de leur mouvement.

23. Installation selon l'une quelconque des revendications précédentes, **caractérisée en ce qu'**elle est conçue comme installation de séchage par congélation (1) munie d'une chambre (2) dans laquelle sont disposés plusieurs emplacements (3) superposés.

24. Installation selon la revendication 23, **caractérisée en ce que** la chambre (2) est munie d'une ouverture de chargement/déchargement (6) en amont de laquelle sont raccordés les dispositifs de chargement et/ou de déchargement.
